Europäisches Patentamt

European Patent Office

Office européen des brevets

(11) Veröffentlichungsnummer: **0 004 565**
**A1**

## (12) EUROPÄISCHE PATENTANMELDUNG

(21) Anmeldenummer: 79100674.5

(22) Anmeldetag: 07.03.79

(51) Int. Cl.²: **F 24 J 3/00**

(30) Priorität: 14.03.78 DE 2810913
31.01.79 DE 2903518

(43) Veröffentlichungstag der Anmeldung:
17.10.79 Patentblatt 79/21

(84) Benannte Vertragsstaaten:
DE FR GB IT NL

(71) Anmelder: Licentia Patent-Verwaltungs-GmbH
Theodor-Stern-Kai 1
D-6000 Frankfurt/Main 70(DE)

(72) Erfinder: Dahlberg, Reinhard, Dr.
Innere Bergstrasse 32
D-7101 Flein(DE)

(54) Verfahren und Anlage zur Gewinnung von Wasserstoff sowie Verwendung dieser Anlage.

(57) Es wird eine Anlage beschrieben, bei welcher die Energie eines Solargenerators über die thermische oder elektrolytische Zersetzung von Wasser zur Erzeugung von Wasserstoff benutzt wird. Die Vorrichtung arbeitet in Form einer automatischen "Plantage", die als Insel ausgebildet ist oder sich auf dem Land befindet. Der durch die Zersetzung des Wassers freigesetzte Wasserstoff wird aufgefangen, automatisch gespeichert und regelmäßig abgeführt.

Fig. 1

EP 0 004 565 A1

Die Erfindung betrifft ein technisch-ökonomisches
Konzept zur Ablösung von fossilen Brennstoffen durch
Wasserstoff, welcher mit Hilfe einer Anlage, die Wasser mittels Sonnenenergie in Wasserstoff und Sauerstoff zerlegt, erzeugt wird.

Aus der DE-OS 25.20 044 ist es prinzipiell bekannt,
daß Wasser mit Hilfe der aus Sonneneinstrahlung gewonnenen elektrischen Energie in Wasserstoff und
Sauerstoff zerlegt werden kann. Ferner sind bereits
vielfältige Verfahren zur technischen Nutzung von
Sonnenenergie bekannt. Sie reichen von der Erzeugung
warmen Brauchwassers mit Hilfe von Sonnenstrahlung,
etwa für Heizungszwecke, über die Erzeugung elektrischer Energie in Wärmekraftmaschinen oder fotovoltaischen Generatoren bis hin zu Bio-Synthese-Anlagen.
Allen bekannten Verfahren zur Nutzung der Sonnenenergie ist gemeinsam, daß sie kein grundsätzliches,
großtechnisch realisierbares Konzept enthalten und
keine generelle Alternative zu fossilen Energieträgern oder zur Kernenergie bilden. Sie können eine
Nutzung von Sonnenergie nur als Ergänzung zu den anderen Energieträgern anbieten. Die Sonnenenergie
fällt auf der Erdoberfläche nur in der relativ verdünnten Form von maximal $1kW/m^2$ an, und auch diese
geringe Energiedichte fällt mit der geografischen
Breite noch stark ab. Zusammen mit dem relativ geringen Wirkungsgrad der Umwandlung von Sonnenenergie
in elektrische Energie und von elektrischer Energie
in die chemische Energie des Wasserstoffs bieten Verfahren und Einzelanlagen zur Erzeugung und Speicherung
von Wasserstoff kein technisch-ökonomisches Alternativ-Konzept zu Erdöl, Erdgas, Kohle und Kernenergie.
Hinzu kommt daß bei vielen großtechnischen Energieanwendungen, wie z. B. bei Prozeßwärmen oder mechanischen Bewegungen, auch viel höhere Leistungsdichten
benötigt werden, wie sie bei einer direkten Verwendung von Sonnenenergie erzielbar sind. Fossile Brennstoffe oder Kernenergie sind daher auch durch direkten Einsatz von Sonnenenergie etwa in Form von elektrischer Energie nicht zu ersetzen. Die vorliegende Erfindung hat sich die Aufgabe gestellt, mit an sich bekannten und erprobten Methoden und Technologien einen Weg zur Nutzung der Sonnenenergie als generelle Alternative auch für fossile Brennstoffe und Kernenergie zu beschreiben. Sie geht von der Erkenntnis aus, daß dieses Ziel nur über eine ökonomische großtechnische und globale Nutzung der Sonnenenergie erreichbar ist.

Zur Lösung dieser Aufgabe wird bei einer Anlage der eingangs beschriebenen Art erfindungsgemäß vorgeschlagen, daß die Anlage als automatisch arbeitende Großstation ausgebildet ist, die bei Sonneneinstrahlung über große Zeiträume hinweg kontinuierlich und in großtechnischem Umfang Wasserstoff als Ersatz für Energieträger, wie Erdöl, Kohle und Erdgas, erzeugt und daß Mittel zur Speicherung und/oder Transportierung des Wasserstoffes vorgesehen sind.

Eine derartige, automatisch arbeitende "Solare Wasserstoff-Plantage" stellt gewissermaßen ein Analogon zu einer Erdölquelle dar. Wenn sie einmal in Betrieb genommen ist, liefert sie mit geringfügiger Wartung über ihre gesamte Lebensdauer hinweg automatisch und simultan bei Sonneneinstrahlung Wasserstoff durch Zersetzung von Wasser. Die Zersetzung des Wassers kann elektrolytisch oder thermisch erfolgen. Den Standort für die solare Wasserstoff-Plantage wird man zweckmäßigerweise in die Tropen oder mindestens in die Subtropen legen.

Vorzugsweise sind mindestens Teile der Großstation als künstliche Insel ausgebildet, die in unmittel-Bei den Sonnenkollektoren kann es sich beispielsweise um Spiegel- und Linsensysteme oder auch um Fluoreszenz-Kollektoren handeln, die dem jeweiligen Sonnenstand automatisch nachgeführt werden und stets so eingestellt sind, daß die Sonnenstrahlen auf einen Brennfleck oder auf Hohlspiegel konzentriert werden, in deren Brennpunkt oder Brennlinien sich Behälter- oder Röhrensysteme mit Wasser befinden. Zur optimalen Regelung der Gesamtanlage sind zumindest in den Bereichen der Anlage, wo das Wasser zerlegt und die Spaltprodukte abgeführt werden, Sensoren und Sensorleitungen vorgesehen, die der Steueranlage alle extern zugänglichen Informationen, wie beispielsweise Temperaturen, Stoffdurchsatz, Zersetzungsgrad, Gasmenge und Gasgeschwindigkeit, innerhalb der Anlage zuführen. Von der Steueranlage führen dann Regelkreise zu Pumpen, Gebläsen, Abscheidern, Kompressoren und Förderanlagen, so daß in Abhängigkeit von den externen Informationen mittels der programmierten Steueranlage optimale Verhältnisse einstellbar sind. Vorzugsweise wird auch die Füllung und Entleerung sowie der Weitertransport des Wasserstoffs und gegebenenfalls der übrigen Spaltprodukte von einer programmgesteuerten Regelanlage automatisch durchgeführt.

Der bei der Zersetzung des Wassers freiwerdende Wasserstoff wird aufgefangen und in Behälter in gasförmiger oder flüssiger Form gespeichert. Der Wasserstoff kann auch chemisch, beispielsweise als Hydrid (etwa $CaH_2$), in Hydrid-Pulver-Gemischen oder in Form von Hydrazin, Alkohol, Kohlenwasserstoffe usw. gebunden werden. Vorzugsweise wird auch der bei der Wasserzersetzung anfallende Sauerstoff aufgefangen und der chemischen Weiterverarbeitung zugeführt. Da mit Hilfe der erfindungsgemäßen Anlage vorzugsweise auch Meerwasser in Wasserstoff und gegebenenfalls Sauerbarer Küsten- oder Ufernähe von Meeren oder Binnengewässern verankert werden kann. Es besteht jedoch auch die Möglichkeit, die Anlage als freischwimmende oder verankerte, unsinkbare Insel auf offener See zu stationieren. Ferner kann eine fest installierte Station beispielsweise in Wüstengebieten in Nähe ausreichend großer Wasservorkommen angelegt werden. Als Standort für eine derartige Anlage kommt der Bereich zwischen 40° nördlicher Breite und 40 ° südlicher Breite in Frage, wobei man bevorzugt innerhalb des Gebietes zwischen dem nördlichen und südlichen Wendekreis bleiben wird.

Auf einer in Küsten- oder Ufernähe angeordneten bzw. verankerten künstlichen Insel werden vorzugsweise die Teile der Anlage untergebracht, die für die Energieumwandlung erforderlich sind. Dabei handelt es sich um fotovoltaische oder um thermische Generatoren oder Reaktoren sowie um die zugehörigen Förder- und Transportsysteme für Wasser, Wasserstoff und Sauerstoff. Die Speicher- und Weiterverarbeitungs-Anlagen werden dagegen bevorzugt auf dem benachbarten Festland errichtet und über Verbindungsleitungen mit der künstlichen Insel verbunden. Wenn es sich allerdings um eine auf offener See freischwimmende künstliche Insel handelt, so müssen auf ihr auch die Speicheranlagen für den erzeugten Wasserstoff untergebracht sein.

Bei der erfindungsgemäßen Anlage ist wesentlich, daß sie bei Sonneneinstrahlung vollautomatisch arbeitet und zentral gesteuert und geregelt wird. Hierzu ist eine zentrale Steueranlage vorgesehen, die die Zufuhr des zu zersetzenden Wassers und die Ableitung der erzeugten Spaltprodukte zu Speicherbehältern regelt und gegebenenfalls die optimale, dem Sonnenstand entsprechende Einstellung der Sonnenkollektoren steuert.

stoff zersetzt wird, können auch die im Meerwasser gelöst enthaltenen Stoffe, wie z. B. Salz und dessen Zersetzungsprodukte, gewonnen und einer chemischen Weiterverarbeitung zugeführt werden. Insofern ist es sinnvoll, an die Wasserstoffgewinnungsanlage eine chemische Großanlage zur Weiterverarbeitung der Spaltprodukte anzuschließen.

In regelmäßigen Zeitabständen wird der gespeicherte Wasserstoff und gegebenenfalls die anderen Stoffe aus der Plantage abgeholt. Dies kann beispielsweise mittels Flüssiggas-Tankschiffen oder Metallpulver-Hydrid-Tankschiffen erfolgen. Der Wasserstoff kann aber auch gasförmig gespeichert oder über eine Pipeline kontinuierlich abgeführt werden.

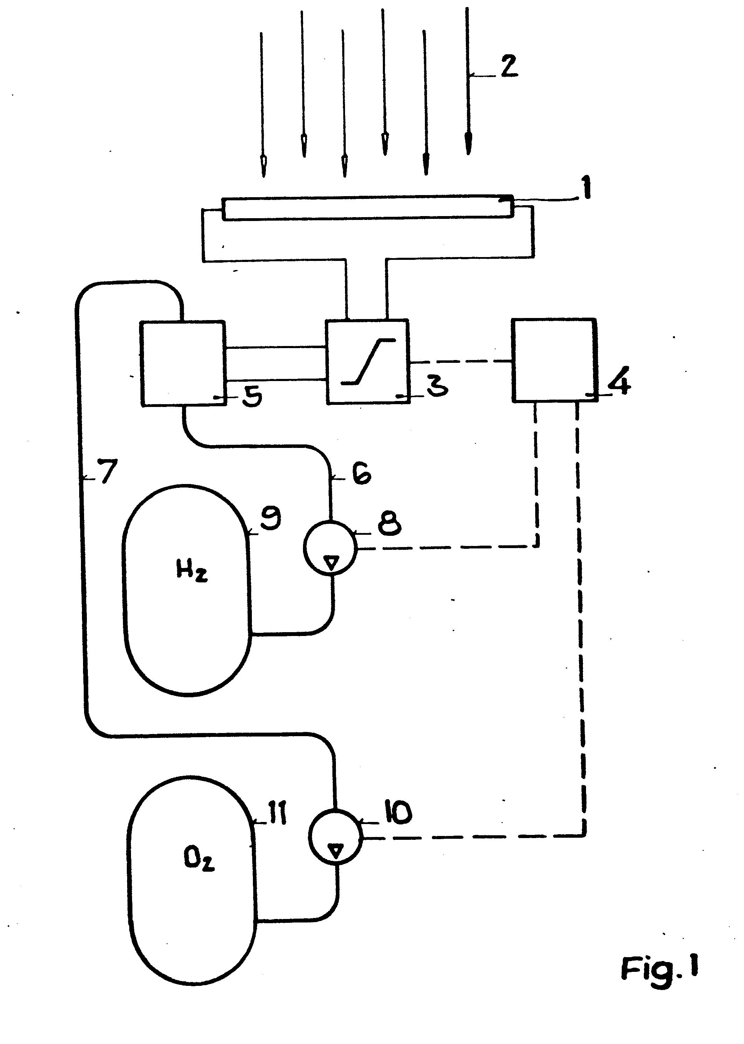

Die Erfindung und ihre weitere vorteilhafte Ausgestaltung soll im folgenden anhand von Ausführungsbeispielen näher erläutert werden. Die Figur 1 zeigt schematisch die Wirkungsweise der Gesamtanlage.

In Figur 2 ist schematisch eine Großanlage dargestellt, bei der mit Hilfe der Sonnenenergie eine Wärmekraftmaschine betrieben wird, die ihrerseits Strom zur elektrolytischen Zersetzung des Wassers liefert.
In Figur 3 ist dargestellt, wie Wasserdampf mit Hilfe eines Reaktionspartners in Wasserstoff und in ein Oxyd umgewandelt wird.
In Figur 4 ist schematisch dargestellt, wie Wasserdampf ohne Reaktionspartner in die Bestandteile Wasserstoff und Sauerstoff durch einen thermischen Prozeß zerlegt werden kann.
Die Figur 5 zeigt eine Großstation, die als fest verankerte Insel in Küstennähe ausgebildet ist.
In Figur 6 ist dargestellt, wie der Wirkungsgrad von fotovoltaischen Solarzellengeneratoren mit Hilfe von Fluoreszenzkörpern erweitert werden kann.

Die Figur 7 zeigt die Ausgestaltung einer Gesamtanlage, wobei die Solarzellengeneratoren auf einer künstlichen Insel angeordnet sind, während die Speicher und Weiterverarbeitungsanlagen sich auf dem Festland befinden.

Der Figur 8 läßt sich der geographische Bereich entnehmen, der für die Stationierung der Großanlage am besten geeignet ist.

In Fig. 1 ist schematisch eine Solarzellenbatterie 1 dargestellt, die beispielsweise mit polykristallinen Silizium-Scheiben aufgebaut ist. Die Sonnenstrahlung 2 wird vom Solarzellengenerator 1 mit einem Wirkungsgrad von ca. 10 % in elektrische Energie umgewandelt. Die elektrische Energie wird über den Spannungsregler 3 der Elektrolyse-Zelle 5 zugeführt. Der freigesetzte Wasserstoff wird in der Leitung 6 gesammelt und über den Kompressor 8 in den Wasserstoff-Behälter 9 geleitet. Der freigesetzte Sauerstoff wird in der Leitung 7 gesammelt und über den Kompressor 10 dem Sauerstoff-Behälter 11 zugeführt. Die Überwachungseinheit 4 sorgt für ein optimales Zusammenspiel und eine Steuerung der Gesamt-Vorrichtung.

Die Vorrichtung nach Fig. 1 wird beispielsweise in einem Wüstengebiet (mit ausreichendem Grundwasservorkommen) in der Nähe des Äquators aufgestellt. Die Globalstrahlung beträgt dort pro Tag und $m^2$ 6,3 kWh oder im Jahr pro $m^2$ 2290 kWh. Da der Wirkungsgrad der Solarzellen-Batterie ca. 10 % ist, stehen pro $m^2$ im Jahr 229 kWh zur Zersetzung von Wasser zur Verfügung.

Theoretisch sind bei der Elektrolyse zur Erzeugung von 1 $m^3$ Wasserstoff unter Normaldruck 2,8 kWh nötig. In der Praxis werden jedoch (vor allem wegen der elektrolytischen Überspannung) etwa 4,5 kWh für 1 $m^3$ Wasserstoffgas unter Normaldruck benötigt. Es

können also pro m$^2$ Solarzellenfläche im Jahr $\frac{229}{4,5}$ = 50,8 m$^3$ Wasserstoff unter Normaldruck erzeugt werden. Da der Heizwert von 1 m$^3$ Wasserstoff unter Normaldruck ca. 3 kWh und der Heizwert von 1 kg Erdöl ca. 12 kWh ist, erzeugt eine Fläche von 1 m$^2$ Solarzelle pro Jahr eine Wasserstoffmenge, die im Heizwert $\frac{50,8}{4}$ = 12,7 kg Erdöl entspricht. Zur Erzeugung eines Erdöläquivalentes von 1 Tonne Erdöl pro Jahr in Form von Wasserstoff wird eine Solarzellenfläche von $\frac{1000}{12,7}$ = 78,7 m$^2$ benötigt. Die erforderlichen Investitionskosten werden sich in absehbarer Zeit durch eine kostengünstige Großproduktion polykristalliner Solarzellen so erniedrigen, daß eine ausreichende Verzinsung des eingesetzten Kapitals erzielt wird. Dabei hängt die Verzinsung bzw. die Kapitalrückflußzeit empfindlich vom Ölpreis ab.

(Sollte sich z. B. der Ölpreis im Betrachtungszeitraum etwa verdoppeln, dann würde sich die Kapitalrückflußzeit halbieren und die Verzinsung verdoppeln).

Da die Ölvorräte begrenzt sind und der Energiebedarf ständig steigt, kann die erfindungsmäßige Anlage kostengünstig arbeiten.

Verbesserungen der Wirkungsgrade von Solargenerator und Wasserzersetzung würden ebenfalls gravierend in die Kosten und die Kapitalrückflußzeit eingehen. (Bei 100 % Wirkungsgrad für die Umwandlung der Sonnenenergie und der Wasserzersetzung würde als theoretisches Maximum für 1 Tonne Erdöläquivalent pro Jahr am Äquator nur eine Solar-Generatorfläche von 4,9 m$^2$ benötigt werden). Mit Hilfe der "Wasserstoff-Plantage" gemäß der Erfindung wird die Sonnenenergie zu einer echten Alternative für die knapper werdenden fossilen Energieträger und für die Kernenergie, da die Möglichkeit besteht, Wasserstoff sicher zu speichern und zu transportieren.

Mit Wasserstoff, der in einem kontinuierlichen Prozeß aus Sonnenergie in Wasserstoff-Plantagen erzeugt wird, die sich in Äquator-Nähe schwimmend auf dem Ozean, in Küstennähe oder in Wüstengebieten befinden, kann für praktisch unbegrenzte Zeiträume ein umweltfreundlicher Energieträger gewonnen werden, der auch mengenmäßig die Rolle von Erdöl und Kohle in der Energiewirtschaft übernehmen kann.

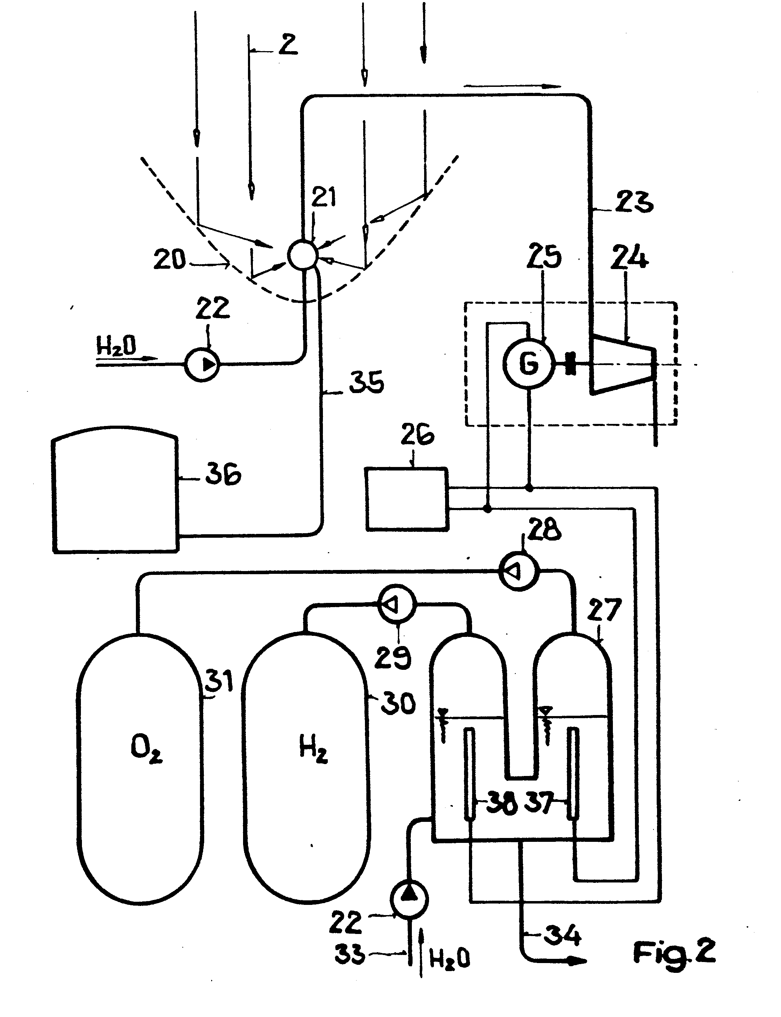

In der Fig. 2 ist ein Parabolspiegel 20 dargestellt, der das einfallende Licht 2 auf den Brennpunkt des Hohlspiegels konzentriert, in dem beispielsweise eine Wasserverdampfungsanlage 21 angeordnet ist. Die Anlage kann auch ähnlich den Sonnenkraftwerken in den Pyrenäen so ausgebildet sein, daß große Flächen mit Spiegeln bedeckt sind, die automatisch der Sonne ständig so nachgeführt werden, daß alles einfallende Licht auf einen weiteren Hohlspiegel konzentriert wird, in dessen Brennpunkt wiederum eine Wasserverdampfungsanlage angeordnet ist. Die Wasserverdampfungsanlage 21 ist beispielsweise ein Behälter, dem über eine Pumpe 22 Wasser, beispielsweise Meerwasser, zugeführt wird. Bei der Verdampfung von Meerwasser fällt eine in der Konzentration ständig zunehmende Solelösung an, die beispielsweise über die Rohrleitung 35 einem Auffang-Behälter 36 zugeführt wird und beispielsweise in Salz und andere Spaltprodukte weiterverarbeitet werden kann. Der im Verdampfungsbehälter 21 erzeugte Wasserdampf wird über die Rohrleitung 23 einer Dampfturbine 24 zugeführt, die einen Generator 25 antreibt.

Der vom Generator 25 erzeugte Strom wird über Kabelleitungen direkt den Elektroden 37 und 38 eines Elektrolyse-Gerätes 27 zugeführt. Als Energiepuffer kann außerdem an den Generator eine Batterie 26 angeschlossen werden.

Dem Elektrolyse-Gerät 27 wird über eine Pumpe 22 Wasser, beispielsweise Meerwasser, zugeführt, was wiederum die Abführung der sich konzentrierenden Sole über eine Leitung 34 erforderlich macht. Im Elektrolyse-Gerät wird das Wasser in an sich bekannter Weise in Wasserstoff und Sauerstoff aufgespalten, wobei Kompressoren 28 und 29 dafür sorgen, daß die sich im Elektrolyse-Gerät 27 ansammelnden Gase zu den Auffangbehältern 30 bzw. 31 transportiert werden.

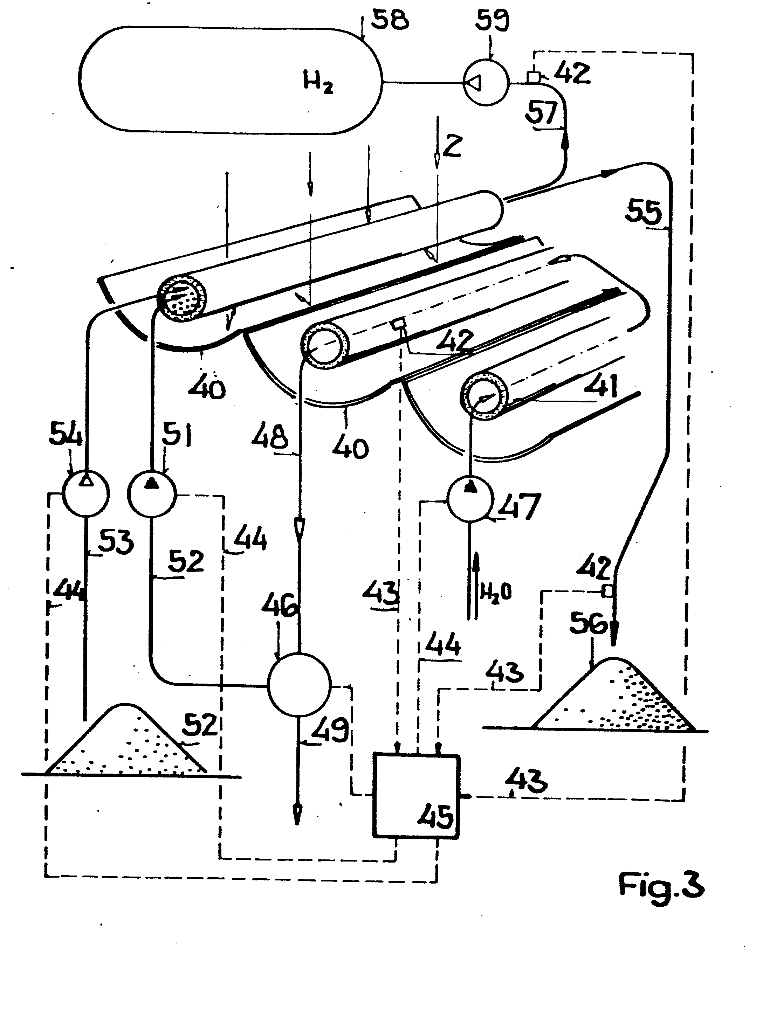

In der Fig. 3 sind Sonnenkollektoren 40 angedeutet, die rinnenförmig ausgebildet sind und im Querschnitt beispielsweise parabolische Form haben. In den Brennlinien dieser Hohlspiegel verlaufen Röhren 41, die zumindest teilweise mäanderförmig miteinander verbunden sind. Die Röhren 41 müssen aus einem temperaturbeständigen Material bestehen. Das Röhrensystem wird eingangsseitig an eine Wasserpumpe 47 angeschlossen, die wiederum beispielsweise Meerwasser durch das Röhrensystem drückt, wobei die Erwärmung des Wassers ständig zunimmt. Das Röhrensystem weist beispielsweise Unterbrechungen auf, in denen über Leitungen 48 an das Rohrsystem angeschlossene Abscheider 46 angeordnet sind. Diese Abscheider sorgen beispielsweise für die Trennung des erhitzten Wassers bzw. Wasserdampfes von den im Wasser gelösten Salzen. Die Spaltprodukte werden aus dem Abscheider 46 über eine gesonderte Rohrleitung 49 abgeführt. Der Wasserdampf oder das stark erhitzte Wasser werden dann über die Rohrleitung 52 und einen Kompressor oder eine Pumpe 51 wiederum dem Rohrsystem zugeführt. Gleichzeitig wird in diesen Teil des Rohrsystems ein Reaktionspartner 52 eingebracht, der beispielsweise aus Eisenpulver oder Eisenkörnern besteht. Bei einer Temperatur von ca. 600 °C im Rohrsystem verbindet sich der im Wasserdampf enthaltene Sauerstoff mit dem Reaktionspartner zu einem Oxyd, wodurch Wasserstoff freigesetzt wird und über die Rohrleitung 57 und einen Kompressor 59 in Auffangbehälter 58 abgeleitet werden kann. Das Reaktionsprodukt, beispielsweise Eisenoxyd 56, wird über eine Leitung 55 abgeführt. Für die ständige Zufuhr des Reaktionspartners 52 dient eine Transportleitung 53, in der sich Pumpengebläse oder andere geeignete Fördermittel 54 befinden.

Der Teil des Röhrensystems, in dem die Reaktion abläuft kann in durch Filter getrennte Kammern aufgeteilt sein, wobei dann die eine Kammer von dem pulverförmigen oder körnigen Reaktionspartner durchlaufen wird, während in der anderen Kammer der Wasserdampf und schließlich der freigesetzte Wasserstoff geführt wird. Bei einem Einkammersystem müssen am Ende des Röhrensystems Filter vorgesehen sein, die den Wasserstoff vom Oxydpulver trennen.

Eine zentrale und programmierte Regel- und Steueranlage 45 sorgt für optimale Verhältnisse. Hierzu sind im Röhrensystem sowie in den Zu- und Ableitungen Sensoren 42 angeordnet, mit denen die Temperaturen, der Stoffdurchsatz, der Zersetzungsgrad, die Gasmenge und Gasgeschwindigkeit, der Druck, die Flüssigkeitsmengen, der Oxidationsgrad des Reaktionspulvers und andere Informationen gesammelt und über Sensorleitungen 43 an die zentrale Regel- und Steueranlage 45 weitergeleitet werden. In der zentralen Steueranlage 45 werden diese externen Informationen mittels der vorgegebenen Programme verarbeitet und die optimalen Arbeitsverhältnisse ermittelt, die über von der zentralen Steueranlage ausgehende Regelkreise 44 an den Pumpen, Kompressoren, Gebläsen und Förderanlagen sowie den Abscheidevorrichtungen eingestellt werden.

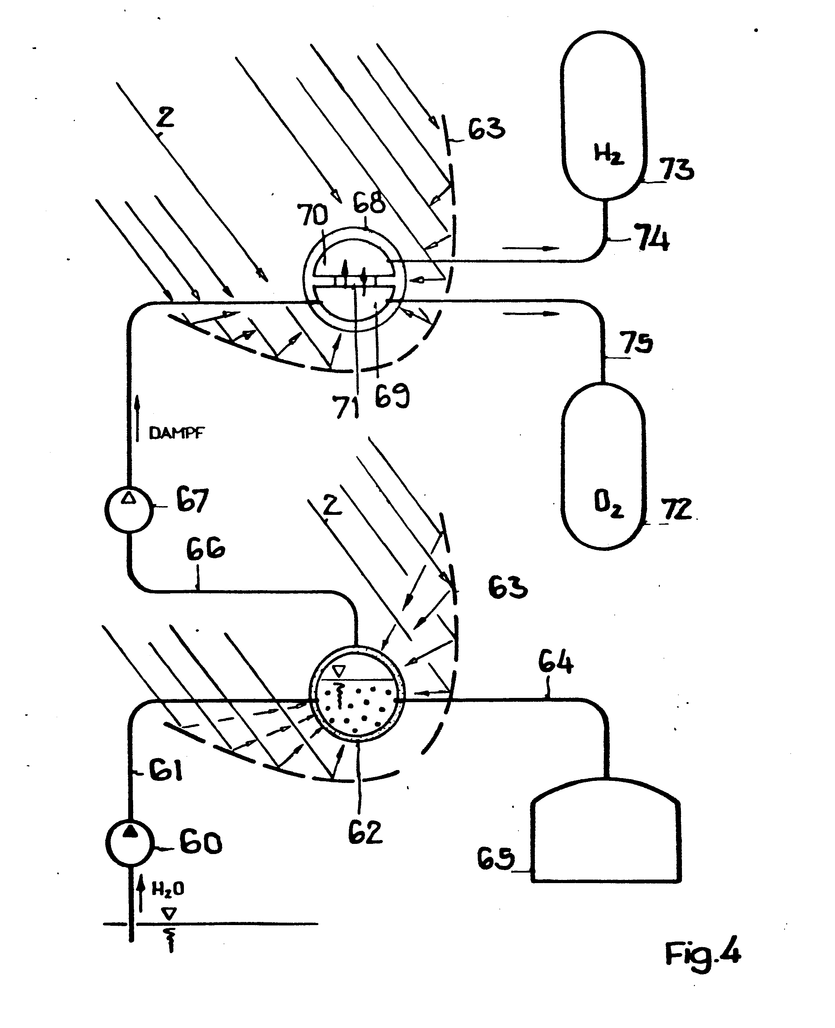

In der Fig. 4 ist wiederum ein Röhrensystem dargestellt, das beispielsweise mäanderförmig die Brenn-

linien von rinnenförmigen, im Querschnitt parabolischen Sonnenkollektoren 63 durchläuft. Diese Sonnenkollektoren konzentrieren das einfallende Licht 2 auf die Brennlinie, so daß das die Röhre durchlaufende Medium ständig zunehmend erhitzt wird.

Eingangsseitig wird das Röhrensystem 62 an eine Wasserpumpe 60 angeschlossen, die über die Rohrleitung 61 beispielsweise Meerwasser der Röhre 62 zuführt. Pumpen sorgen dafür, daß das Wasser und später der entstehende Wasserdampf das Röhrensystem durchlaufen. Mit der Verdampfung des Wassers nimmt bei der Verwendung von Meerwasser die Konzentration der Sole zu, die in bestimmten Bereichen des Röhrensystems über Leitungen 64 zumindest teilweise abgeleitet werden muß. Die Sole wird in Behältern 65 gesammelt und der Weiterverarbeitung zugeführt.

Der entstehende Wasserdampf wird über Kompressoren einem Teil des Röhrensystems zugeführt, bei dem die Röhren 68 in 2 Kammern 69 und 70 aufgeteilt sind. Beispielsweise in die Kammer 69 wird über den Kompressor 67 und die Rohrleitung 66 der Wasserdampf eingeleitet, der sich nun weiter im Verlauf der Röhre 68 erhitzt. Bei Temperaturen über 800 °C zersetzt sich der Wasserdampf immer stärker in Sauerstoff und Wasserstoff. Der Wasserstoff kann über die Trennwand 71 zwischen den beiden Kammern 68 und 69, die beispielsweise aus einem Palladiumfenster besteht, in die Kammer 68 diffundieren und wird von dort über eine Rohrleitung 74 dem Aufnahmebehälter 73 zugeführt. In der unteren Kammer verbleibt nur der Sauerstoff, der gleichfalls am Ende des Röhrensystems über eine Leitung 75 einem Auffangbehälter 72 zugeleitet wird.

Auch bei der Anlage gemäß der Figur 4 wird man vorzugsweise ein Steuer- und Regelsystem verwenden, das dem anhand der Fig. 3 beschriebenen System entspricht.

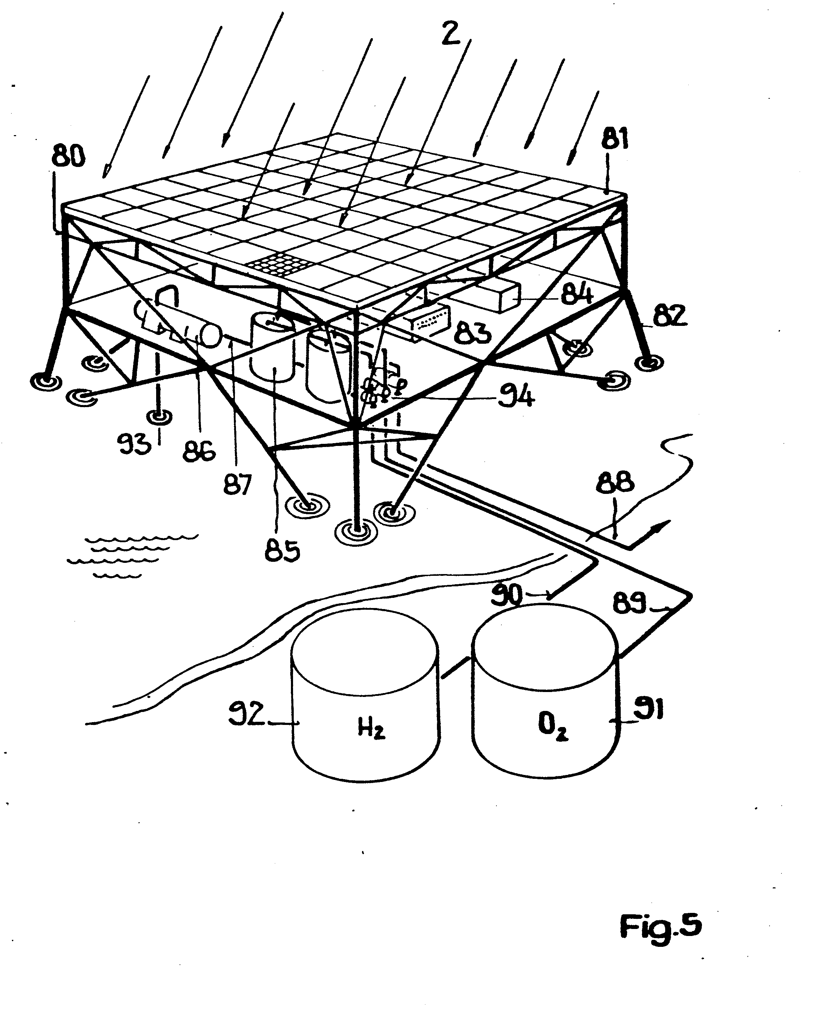

Gemäß Fig. 5 ist die Großstation als in unmittelbarer Küstennähe verankerte künstliche Insel 80 ausgebildet. Diese Insel 80 kann, was die Schwimmfähigkeit und die Verankerung betrifft, ähnlich wie eine künstliche Bohrinsel ausgebildet sein. Die Oberfläche der Insel ist jedoch großflächig mit Solarzellengeneratoren 81 bestückt, die beispielsweise aus miteinander verschalteten fotovoltaischen Solarzellen bestehen.

Beispielsweise im Unterbau der Insel befinden sich weitere für den Betrieb der Anlage erforderliche Baugruppen. So beispielsweise die Wasserpumpe 86, die über eine Steigleitung 93 Meer-, See- oder Flußwasser fördert und den Elektrolyse-Geräten 85 über eine Leitung 87 zuführt. Die von den Sonnenkollektoren erzeugte elektrische Energie wird über Sammelschienen, beispielsweise unter Zwischenschaltung einer Batterie 84, den Elektroden der Elektrolyse-Geräte 85 zugeführt. Der in den Elektrolyse-Geräten erzeugte Sauerstoff und Wasserstoff sowie die weiteren Spaltprodukte werden über Pumpen 94 und Rohrleitungen 88, 89 und 90 abgeleitet. In der Figur sind die Sammelbehälter 91 und 92 für Wasserstoff bzw. Sauerstoff dargestellt.

Auf der künstlichen Insel oder am Festland ist wiederum eine zentrale Regel- und Steueranlage untergebracht, die in der Fig. mit der Ziffer 83 angedeutet ist. Die Insel ist über die Standvorrichtungen 82 fest mit dem Untergrund verbunden, so daß erhöhter Seegang die Station nicht gefährden kann.

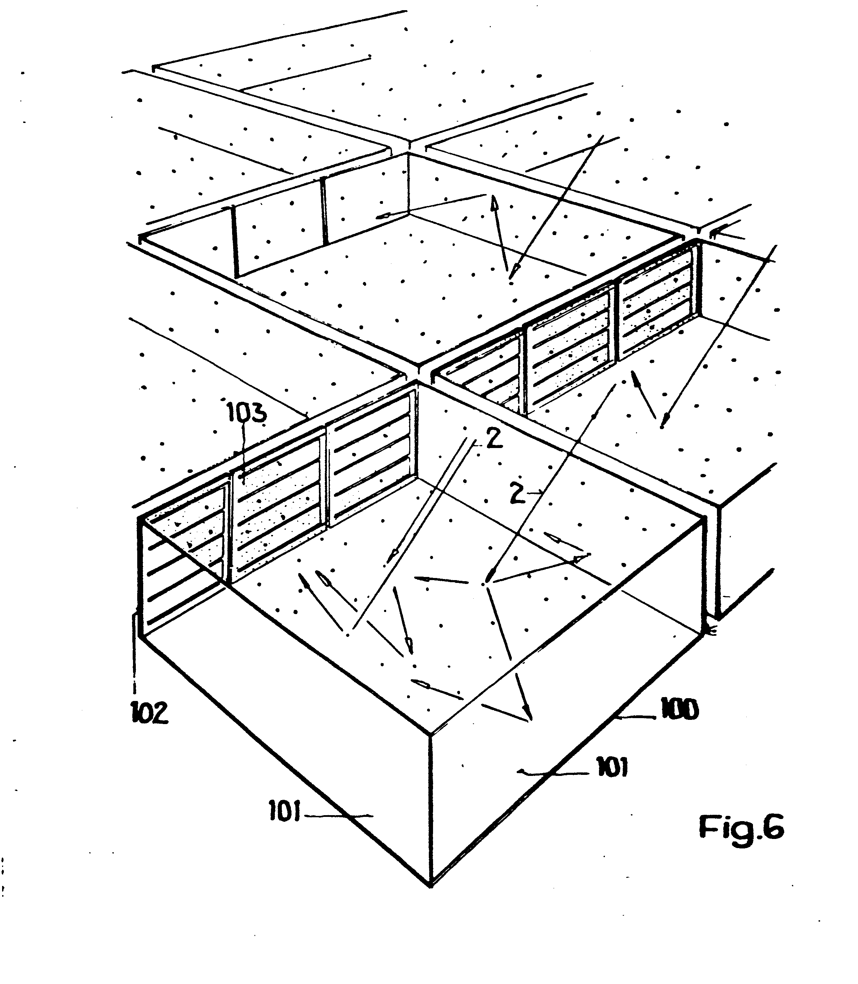

Aus der Fig. 6 ergibt sich, wie mit Hilfe sogenannter Fluoreszenzkollektoren 100 der Bedarf an aktiven fotovoltaischen Solarzellen reduziert werden kann. Diese Fluoreszenzkollektoren sind an sich beispielsweise aus der Zeitschrift Appl. Phys. 14 , 1977, S. 123 - 139, bekannt. Die Fluoreszenzkörper 100

- 14 -

0004565

weisen beispielsweise eine halbverspiegelte Lichteinfallsfläche auf, während die übrigen Flächen 101
des Fluoreszenzkörpers, mit Ausnahme der die Solarzellen tragenden Fläche 102, ganz verspiegelt sind.
Das einfallende Licht wird in dem Fluoreszenzkörper
100 so oft reflektiert, bis es mit einem geeigneten
Einfallwinkel auf die Solarzellen 103 trifft und
dort eine Energieumwandlung herbeiführt. Außerdem
werden für die Solarzellen unwirksame Anteile des
einfallenden Lichtes mit Hilfe der im Kollektor enthaltenen Fluoreszenzpartikel in eine für die Energieumwandlung in der Solarzelle geeignete Wellenlänge
übergeführt. Auf diese Weise kann der Wirkungsgrad
erheblich, beispielsweise auf 32 %, gesteigert werden.

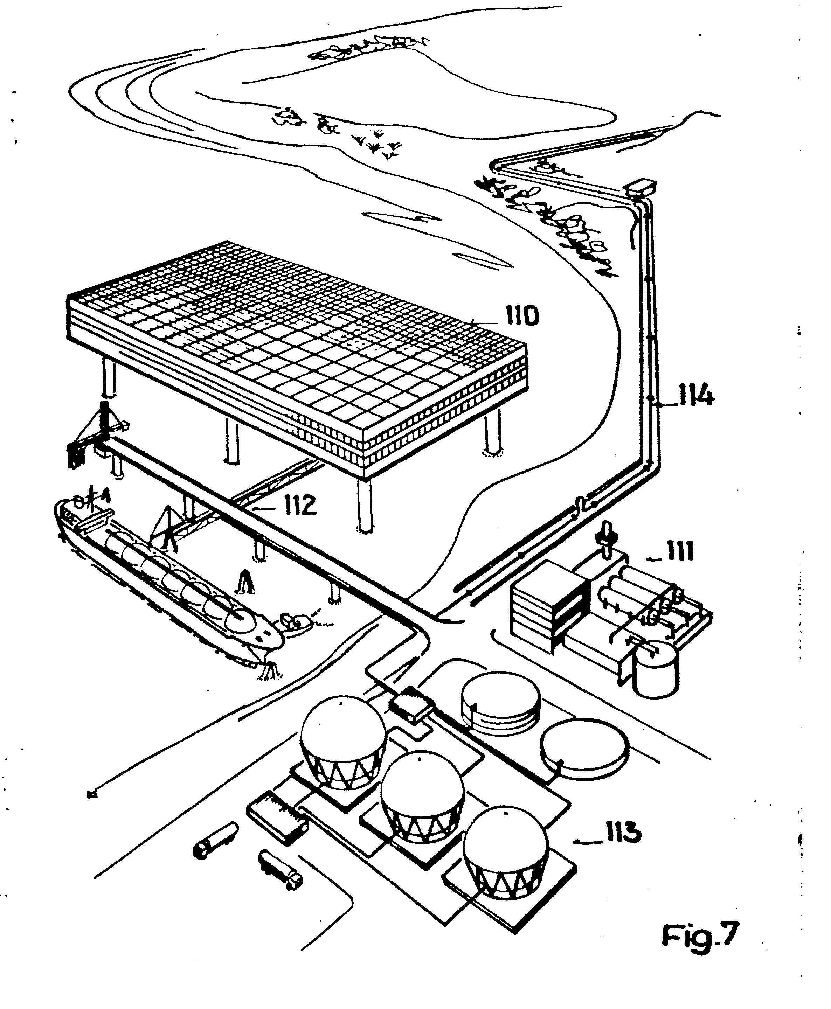

Die Fig. 7 zeigt eine Übersicht der Gesamtanlage.
Wiederum ist eine in Küstennähe verankerte Insel
110 vorgesehen, deren der Lichteinstrahlung zugewandte Oberflächenseite großflächig mit Solarzellen bzw.
mit Fluoreszenzkollektoren und daran angeordneten
Solarzellen bestückt ist. Im Unterbau der Insel können wiederum weitere technische Einrichtungen in der
bereits beschriebenen Weise untergebracht werden.
Am benachbarten Festland sind Sammelbehälter 113 vorgesehen, denen von der Insel die erzeugten Spaltprodukte über Rohrleitungssysteme zugeführt werden. Die
aus Wasser erzeugten Spaltprodukte wie Sauerstoff,
Wasserstoff, Salze und weitere Zersetzungsprodukte
können direkt in einer chemischen Großanlage 111
weiterverarbeitet oder über Pipelines 114 oder Gas-
Tankschiffe abtransportiert werden. Die Rohrleitungen können unterirdisch oder über Brücken 112 bzw.
Verladeeinrichtungen verlegt sein.

Die Solare Wasserstoff-Plantage gemäß Fig. 7 kann
jedoch auch auf dem Meer als freischwimmende Insel
(z. B. außerhalb aller Hoheitsgewässer) ausgebildet sein, da sie im Gegensatz zu einer Bohrinsel sehr viel geringere Anforderungen an die Standortgenauigkeit erfüllen muß. Auf dem freien Ozean wäre eine Standortgenauigkeit von z. B. ± 10 km ausreichend und mit einem relativ einfachen, vollautomatisch gesteuerten Antriebssystem zu gewährleisten.

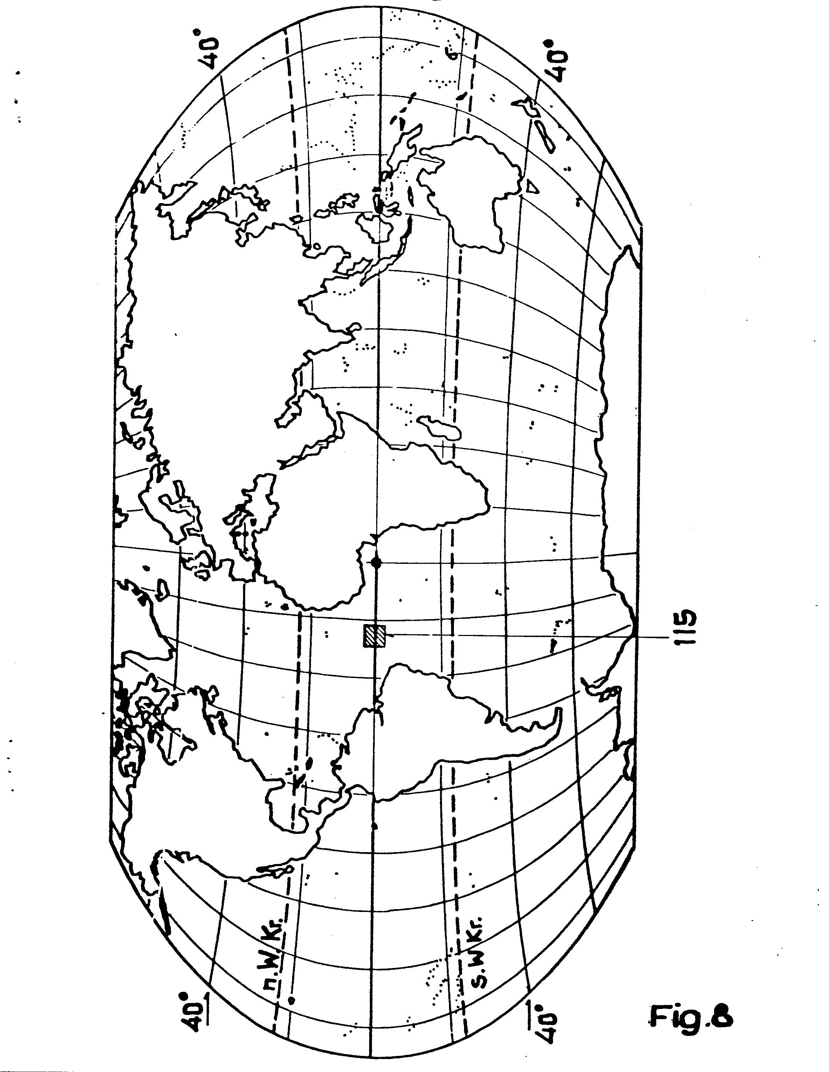

Aus der Weltkarte in Fig. 8 ergibt sich noch der günstigste Einsatzort der erfindungsgemäßen Großstation. Um einen einigermaßen günstigen Wirkungsgrad zu erzielen, sollte die Anlage zwischen dem 40. Breitengrad Nord und dem 40. Breitengrad Süd liegen. Bevorzugt wird der geographische Bereich um den Äquator, also beispielsweise der Bereich zwischen dem südlichen und dem nördlichen Wendekreis. Da sich in diesem geographischen Bereich große Ozeane und auch große unbesiedelte oder dünn besiedelte Gebiete, auch Wüstengebiete, in unmittelbarer Küstennähe auf dem Land befinden, dürfte selbst eine räumlich sehr große Anlage ohne schwierige Raumprobleme zu realisieren sein. Zur Veranschaulichung der gigantischen Ausmaße des Mehr-Generationen-Problems einer totalen Ablösung des Erdöls durch Wasserstoff über Solare Wasserstoff-Plantagen soll noch die aktive Gesamtfläche angegeben werden, die zur Erzeugung eines Wasserstoff-Jahres-Äquivalentes für den Weltjahresverbrauch an Erdöl benötigt würde. Wenn man den Jahresverbrauch an Erdöl weltweit mit ca. 3 Milliarden Tonnen annimmt, dann würden die dafür benötigten Solaren Wasserstoff-Plantagen in den Tropen (mit den heute erreichten Wirkungsgraden) eine Fläche von etwa 490 x 490 Kilometern einnehmen. Gemäß Fig. 8 steht in den Tropengebieten der Erde eine Gesamtfläche zur Verfügung, die um 2 bis 3 Größenordnungen größer als diese Fläche ist. Die schraffierte Fläche 115 in Fig. 8 veranschau-

- 16 -                        0004565

licht die Größenordnung der Wasserstoff-Plantagen-
Fläche, die zur Erzeugung eines Wasserstoff-Jahres-
Äquivalentes für $3 \cdot 10^9$ Tonnen Erdöl benötigt würde.

- 17 -

0004565

Patentansprüche

1) Anlage zur Gewinnung von Wasserstoff, mit der Wasser mittels Sonnenenergie in Wasserstoff und Sauerstoff zerlegt wird, dadurch gekennzeichnet, daß die Anlage als automatisch arbeitende Großstation ausgebildet ist, die bei Sonneneinstrahlung über große Zeiträume hinweg kontinuierlich und in großtechnischem Umfang Wasserstoff als Ersatz für Energieträger, wie Erdöl, Kohle und Erdgas, erzeugt und daß Mittel zur Speicherung und/oder Transportierung des Wasserstoffes vorgesehen sind.

2) Anlage nach Anspruch 1, dadurch gekennzeichnet, daß zumindest Teile der Großstation als künstliche Insel (80, 110) ausgebildet sind.

3) Anlage nach Anspruch 2, dadurch gekennzeichnet, daß die Insel Sonnenkollektoren (81) sowie Förderungs- und Transportsysteme für Wasser (z. B. 86, 93), Wasserstoff (z. B. 90) und Sauerstoff (z. B. 89) enthält, während die Speicher- und Weiterverarbeitungsanlagen (91, 92) auf dem Festland über Verbindungsleitungen mit der künstlichen Insel verbunden sind.

4) Anlage nach einem der vorangehenden Ansprüche, dadurch gekennzeichnet, daß sie als künstliche und in Küsten- oder Ufernähe verankerbare Insel ausgebildet ist.

5) Anlage nach einem der Ansprüche 1 - 3, dadurch gekennzeichnet, daß sie als künstliche, freischwimmende und unsinkbare Insel ausgebildet ist, die auch die Speicheranlagen für den erzeugten Wasserstoff enthält.

6) Anlage nach einem der vorangehenden Ansprüche, dadurch gekennzeichnet, daß eine zentrale, automatisch arbeitende Steueranlage (45) vorgesehen ist, die die Zufuhr des Wassers und die Ableitung der erzeugten Spaltprodukte zu Speicherbehältern (58) regelt und gegebenenfalls die optimale, dem Sonnenstand entsprechende Einstellung der Sonnenkollektoren steuert.

7) Anlage nach Anspruch 6, dadurch gekennzeichnet, daß Sensoren (42) und Sensorleitungen (43) vorgesehen sind, die der Steueranlage (45) alle extern zugänglichen Informationen, wie Temperaturen, Stoffdurchsatz, Zersetzungsgrad, Gasmenge und Gasgeschwindigkeit innerhalb der Anlage zuführen und daß ferner Regelkreise (44) vorgesehen sind, durch die in Abhängigkeit von den externen Informationen mittels der programmierten Steueranlage optimale Verhältnisse einstellbar sind.

8) Anlage nach einem der vorangehenden Ansprüche, dadurch gekennzeichnet, daß für die Füllung, Entleerung und den Weitertransport des Wasserstoffs und gegebenenfalls der übrigen Spaltprodukte eine programmgesteuerte und automatisch arbeitende Regelanlage vorgesehen ist.

9) Anlage nach einem der vorangehenden Ansprüche, dadurch gekennzeichnet, daß für den Wasserstoff und gegebenenfalls den Sauerstoff Speicherbehälter (72/73) vorgesehen sind, die für die Aufnahme der Spaltprodukte in gasförmiger, flüssiger und/oder gebundener fester Form geeignet sind.

10) Anlage nach Anspruch 9, dadurch gekennzeichnet, daß die Speicherbehälter für den Gasferntransport an Pipelines (114) anschließbar sind.

11) Anlage nach einem der vorangehenden Ansprüche, dadurch gekennzeichnet, daß Mittel vorgesehen sind, durch die das Wasser thermisch bei hoher Temperatur in Wasserstoff und Sauerstoff zersetzt wird.

12) Anlage nach Anspruch 11, dadurch gekennzeichnet, daß ein Röhrensystem (41) vorgesehen ist, das innerhalb der Brennpunkte oder Brennlinien von Sonnenkollektoren (40) verläuft, daß Mittel vorgesehen sind, durch die diesem Röhrensystem einerseits Wasser und andererseits ein Reaktionspartner (52) für den abgespalteten Sauerstoff zuführbar ist und daß ferner Mittel vorgesehen sind, durch die der abgespaltene Wasserstoff Speicherbehältern (58) zugeführt und die Reaktionsprodukte (56) abgeführt werden.

13) Anlage nach Anspruch 12, dadurch gekennzeichnet, daß die Zu- und Ableitungsmittel an Zu- und Ableitungsrohre angeschlossene Pumpen (51, 47), Gebläse, Abschneider (46), Kompressoren (59) und Förderanlagen sind.

14) Anlage nach einem der Ansprüche 1 - 11, dadurch gekennzeichnet, daß ein Röhrensystem (62, 68) bzw. Hochtemperaturöfen vorgesehen sind, die innerhalb der Brennpunkte von Sonnenkollektoren (63) angeordnet sind, daß die Röhren bzw. Öfen zumindest in einzelnen Abschnitten in Kammern (69, 70) aufgeteilt sind, wobei die Trennwand (71) zwischen den Kammern für hindurchdiffundierenden Wasserstoff durchlässig ist, und daß zumindest an die den Wasserstoff führende Kammer (70) ein Wasserstoff-Ableitungssystem (73, 74) angeschlossen ist.

15) Anlage nach einem der vorangehenden Ansprüche, dadurch gekennzeichnet, daß für die Zersetzung des Wassers in Wasserstoff und Sauerstoff Elektrolyse-Geräte (85) vorgesehen sind, die über großflächig angelegte Generatoren (81) aus fotovoltaischen Solarzellen oder über Sonnen-beheizte thermoelektrische Generatoren mit elektrischer Energie versorgt werden.

16) Anlage nach einem der vorangehenden Ansprüche, dadurch gekennzeichnet, daß für die Zersetzung des Wassers in Wasserstoff und Sauerstoff Elektrolyse-Geräte (27) vorgesehen sind, daß zur Energieversorgung dieser Elektrolyse-Geräte ein mit einer Dampfturbine (24) angetriebener Generator (25) vorgesehen ist und daß Sonnenkollektoren (20) vorhanden sind, die die Sonnenenergie auf eine an die Turbine angeschlossene Wasserverdampfungsanlage (21) konzentrieren.

17) Anlage nach einem der vorangehenden Ansprüche, dadurch gekennzeichnet, daß die Sonnenkollektoren mit Linsen- oder Spiegelsystemen zur Konzentration des Sonnenlichtes auf kleinflächige Bereiche ausgestattet sind.

18) Anlage nach einem der vorangehenden Ansprüche, dadurch gekennzeichnet, daß Fluoreszenz-Kollektoren (100) vorgesehen sind, die das einfallende Sonnenlicht auf eine mit Solarzellen (103) bestückte Fläche (102) des Kollektors konzentrieren und gleichzeitig so ausgebildet sind, daß für Sollarzellen unwirksame Anteile des einfallenden Lichtes (2) in Licht einer für die Energieumwandlung in der Solarzelle geeignete Wellenlänge übergeführt werden.

19) Anlage nach einem der vorangehenden Ansprüche, dadurch gekennzeichnet, daß sie an eine chemische Groß-Anlage (111) zur Weiterverarbeitung der Spaltprodukte angeschlossen ist.

20) Anlage nach Anspruch 4, dadurch gekennzeichnet, daß die Insel als schwimm- und transportfähige Anlage (80, 110) ausgebildet ist, die ähnlich dem System bei Bohrinseln mit absenkbaren oder verankerbaren Stützelementen (82) versehen ist.

21) Verfahren zur großtechnischen Gewinnung von Wasserstoff als Primärenergieträger, dadurch gekennzeichnet, daß der über die Sonnenenergie auf thermischem oder elektrolytischem Wege gewonnene Wasserstoff aufgefangen und in gasförmiger, verflüssigter oder chemisch gebundener gasförmiger, flüssiger oder fester Form gespeichert wird.

22) Verfahren nach Anspruch 21, dadurch gekennzeichnet, daß der bei der Zersetzung des Wassers anfallende Sauerstoff aufgefangen und gespeichert wird.

23) Verfahren nach einem der vorangehenden Ansprüche, dadurch gekennzeichnet, daß die im Wasser gelöst enthaltenen Stoffe, wie beispielsweise Salz, aufbereitet und gesammelt werden.

24) Verwendung einer Anlage nach einem der vorangehenden Ansprüche zur Verarbeitung von Meerwasser in Wasserstoff und gegebenenfalls Sauerstoff, Salze und dergleichen.

25) Verwendung einer Anlage nach einem der Ansprüche 1 - 20 als Insel in unmittelbarer Küsten- oder Ufernähe von Meeren oder Binnengewässern.

26) Verwendung einer Anlage nach einem der Ansprüche 1 - 20 als freischwimmende oder verankerte Insel auf offener See.

27) Verwendung einer Anlage nach einem der Ansprüche

0004565

1 - 20 als festinstallierte Station in einem Wüstengebiet in der Nähe ausreichend großer Wasservorkommen.

28) Verwendung einer Anlage nach einem der Ansprüche 1 - 20 im geografischen Bereich zwischen 40° nördlicher Breite und 40° südlicher Breite.

Fig.1

0004565

Fig. 2

Fig.3

Fig.4

0004565

Fig.5

0004565

103

102

101

101

2

2

100

Fig.6

Fig.7

Fig.8

# EUROPÄISCHER RECHERCHENBERICHT

Europäisches Patentamt

Nummer der Anmeldung

EP 79 10 0674

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE – C – 836 129 (GEILENBERG) <br> * Seite 2, Zeile 54; Zeilen 69-70 * <br><br> -- | 1,2,4, 11,25-28 |
|  | US – A – 4 030 890 (DIGGS) <br> * Spalte 8, Zeilen 55-69 * <br><br> -- | 1,11 |
|  | GB – A – 1 491 680 (BARNARD) <br> * Seite 2, Zeilen 105-107 * <br><br> -- | 1,27, 28 |
|  | US – A – 4 021 323 (KILBY) <br> * Spalte 5, Zeilen 25-30 * <br><br> -- | 1,15 |
|  | SOLAR ENERGY, Vol. 19, Seiten 205-210, 1977 <br> COSTOQUE: "Performance data for a terrestrial solar photovoltaic/ water electrolysis experiment" <br><br> ---- | 1,15 |

### KLASSIFIKATION DER ANMELDUNG (Int.Cl.³)

F 24 J 3/00

### RECHERCHIERTE SACHGEBIETE (Int Cl.³)

C 25 B 1/00
B 01 J 1/10
F 24 J 3/00
H 01 M 14/00

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 13-06-1979 | NGUYEN THE NGHIEP |

EPA form 1503.1 06.78